# EUROPEAN PATENT APPLICATION

(11) **EP 3 992 515 A1**
(43) Date of publication of application: **04.05.2022**
(21) Application number: 21198489.3
(22) Date of filing: 09.05.2018
(51) Int. Cl.: F16L 21/08

(54) **RESTRAINT COUPLING**

(62) Divisional of application: 18171559.0
(71) Applicant: Ludwig Frischhut GmbH & Co. KG, 84347 Pfarrkirchen (DE)
(72) Inventor: GEIJBELS, Nicky, 5804VC Venray (NL); HERKER, Martin, 84347 Pfarrkirrchen (DE); HUBBAUER, Bernhard, 84367 Reut (DE); JENKINS, Andrew, Rhondda Cynon Taff, CF417EX (GB)
(74) Representative: Hoefer & Partner Patentanwälte mbB

(57) **Abstract**

The invention regards a restraint coupling (1) for coupling at least one pipe (2a, 2b) comprising a main body (3) including a through hole (24) with a middle axis (100), at least one end ring (4) extending around the middle axis (100), and a plurality of wedge-shaped gripping elements (6), provided around the middle axis in an annular arrangement, wherein each gripping element (6) has a toothed surface (7) adapted to contact the pipe (2a, 2b) and a slanted surface (8) slanted with respect to the toothed surface (7), the slanted surface (8) being in contact with an inside surface (5) of the end ring (4), wherein the end ring (4) can be clamped to the main body (3) via mounting elements (9) thereby pressing the inside surface (5) of the end ring (4) against the slanted surface (8) of each gripping element (6) to shift each gripping element (6) towards the middle axis (100), wherein each gripping element (6) includes a metal insert (16), and wherein the insert (16) comprises a toothed portion (17) arranged at the toothed surface (7) of the gripping element (6) and adapted to contact the pipe (2a, 2b), characterized in that the insert (16) further comprises an extending arm (18) extending from the toothed portion (17) to the slanted surface (8) of the gripping element (6) and an end portion (19) of the extending arm (18) contacts the inside surface (5) of the end ring (4).

## Description

The invention regards a restraint coupling. The restraint coupling is particularly adapted to join two pipes together, wherein the pipes might have different diameters, especially different outside diameters.

Mechanical joints are known from the prior art. Those joints are used to connect one or more plain-ended pipes, providing preferably an end load restraint mechanism that grips and seals on a pipe. The pipes to be connected are classified according to nominal sizes, but show within each size different outside diameters driven by the specific material and fabrication process.

A restraint coupling according to the preamble portion of claim 1 is known from EP 0 794 378 A2. Further restraint couplings are known from EP 1 164 325 A2 and from GB 2 363 437 A.

It is an object of the invention to provide a restraint coupling which allows a safe and reliable coupling of two pipes and/or one pipe to another pipeline component e.g. a flange by simple installation.

This object is solved by the features of the independent claim. The dependent claims contain advantageous embodiments of the invention.

The restraint coupling according to the invention allows connecting of a variety of pipe materials including steel, ductile iron, cast iron, PVC and PE. Particularly, the restraint coupling according to the present invention is a universal product to connect pipes with a wide range of outside diameters. The restraint coupling for coupling at least one pipe comprises a main body, at least one end ring and a plurality of wedge-shaped gripping elements. The main body has a through hole with a middle axis. Particularly, the main body is a sleeve element and basically has the shape of a hollow cylinder, the middle axis being a central axis of this hollow cylinder or sleeve element. The at least one end ring extends around the same middle axis and is preferably mounted to a face side of the main body. This allows inserting a pipe to be coupled with the restraint coupling through the end ring and through the face side of the main body. The plurality of gripping elements is assembled around said middle axis in circular arrangement. Further, each gripping element has a toothed surface adapted to contact the pipe and a slanted surface. The slanted surface is slanted with respect to the toothed surface and is in contact with an inside surface of the end ring. The end ring can be clamped to the main body via mounting elements. The mounting elements preferably are bolts. Due to the end ring being clamped to the main body, the inside surface of the end ring presses on the slanted surface of each gripping element. The resulting wedge effect causes a shift of each gripping element towards the middle axis and thus towards the pipe inserted through the end ring and the side face of the main body. Due to this shifting, the toothed surface of each of the gripping elements is pressed against said pipe such that the pipe is firmly held by the restraint coupling.

Each of the gripping elements includes a metal insert. In an advantageous embodiment, the metal insert is made from steel. The metal insert comprises a toothed portion arranged at the toothed surface of the gripping element. The toothed portion can either protrude from the toothed surface or can be recessed with respect to the toothed surface. The toothed surface might also be flush with the toothed portion of the insert. In any case, the toothed portion is adapted to contact the pipe. In case the toothed portion is recessed with respect to the toothed surface, the toothed portion gets into contact to the pipe due to deformation of the toothed surface. Particularly, the toothed surface of the gripping element plays a significant role on gripping softer pipe materials like PE and the toothed portion of the insert on harder pipe materials like uPVC, steel or ductile iron. The insert comprises an extending arm extending from the toothed portion to the slanted surface of the gripping element. The extending arm is particularly angled with respect to the toothed portion. An end portion of the extending arm contacts the inside surface of the end ring. Therefore, the end portion is particularly flush with the slanted surface or is slightly protruding from the slanted surface. This is particularly advantageous in a case in that metal pipes have to be clamped. The gripping elements, which particularly are made of plastic, might creep when applying high clamping forces. Due to the insert, the clamping force can be transferred from the inside surface of the end ring to the pipe directly via the insert by metal-to-metal contact. There might be a rather thin epoxy coating with a thickness between 200 µm and 600 µm, particularly 250 µm, which does not deteriorate said metal-to-metal joining feature.

In a preferred embodiment, the restraint coupling includes an annular gasket extending around the same middle axis as described above. The gasket is therefore preferably concentrically arranged with respect to the end ring. Further, the gasket comprises a first annular portion and a second annular portion. The first annular portion is adapted to contact the pipe while the second annular portion is arranged between the main body and each gripping element. This allows fluid-tight sealing the pipe and the main body. Each gripping element includes a sealing receiving portion which is provided next to the toothed surface. The sealing receiving portion is adapted to receive the first annular portion. The first annular portion and the second annular portion are therefore preferably angled to each other. The first annular portion is - in the same way as the toothed surface of the gripping elements - pressed to the pipe due to the gripping elements shifting towards the middle axis when clamping the end ring to the main body. Further, the second annular portion is clamped between the gripping elements and the main body. Thus, the pipe is sealed leak tight to the main body.

In a further preferred embodiment, the gasket comprises a third annular portion. The first annular portion and the third annular portion preferably extend from the second annular portion in an angled direction such that the first annular portion, the second annular portion, and the third annular portion are arranged in a U-like shape. Each gripping element is at least partly held within said U-shape. Therefore, the gasket provides a holding function which allows holding the gripping elements during transport and installation of the restraint coupling. This is preferable since the gripping elements are not linked to each other and therefore are loose elements which are independently from each other arranged between the end ring and the main body. Hence, holding the gripping elements via the gasket simplifies handling of the restraint coupling.

Additionally, it is advantageous that the first annular portion comprises protrusions and/or cutouts extending in parallel to the middle axis. These protrusion and/or cutouts act as spreading features which maintain equal spread of the gripping elements. Particularly, the protrusions and/or cutouts restrict circumferential movement of the gripping elements. The protrusions and/or cutouts preferably at least partially frame the toothed surface of the gripping elements and thus restrict movement of the gripping elements within the gasket. This is advantageous since the gripping elements are not linked to each other. Therefore, the gasket maintains an equal spread of the gripping elements thereby avoiding stress concentrations of gripping forces and local loss of gasket support due to wide gaps between two or more gripping elements.

Each gripping element preferably includes a first wing extending in a circumferential direction. The first wing particularly is a protrusion protruding from the surface of the gripping element which is in contact either with the main body or with the second annular portion of the gasket. The first wing of each of the gripping elements contacts an axial outside face of a neighboring gripping element. These first wings enable the construction of a lap-joint assembly. When the gripping elements are located in an annular arrangement, the first wings cover gaps between the single gripping elements.

Further, each gripping element preferably includes a second wing extending in a circumferential direction. The second wing particularly is a protrusion protruding from the sealing receiving portion of each gripping element. The second wing of each of the gripping elements contacts a radial inside face of a neighboring gripping element. These second wings enable the construction of a lap-joint assembly. When the gripping elements are located in an annular arrangement, the second wings cover gaps between the single gripping elements.

Additionally, it is preferred that each gripping element is made from Polyoxymethylene. Further, the gripping element preferably includes an insert made from steel as described above. Due to such a design, the restraint coupling can be coupled to pipes of different materials.

In a further preferred embodiment, one end ring is provided on each face side (axial flange face) of the main body. Therefore, two end rings are provided to be clamped to the same main body. A plurality of gripping elements is provided between each end ring and the main body. Hence, two pipes can be coupled to the main body thereby connecting said pipes. The pipes might have different diameters since each of the pipes is coupled to the restraint coupling independent from the other pipe.

A specific embodiment of the invention is described with reference to the attached drawings. In the drawings:
- Fig. 1: is a schematic overview of the restraint coupling according to an embodiment of the invention,
- Fig. 2: is a schematic view of a gasket of the restraint coupling according to the embodiment of the invention,
- Fig. 3: is a schematic view of a gripping element held in the gasket of the restraint coupling according to the embodiment of the invention,
- Fig. 4: is a first schematic view of three gripping elements of the restraint coupling according to the embodiment of the invention,
- Fig. 5: is a second schematic view of three gripping elements of the restraint coupling according to the embodiment of the invention,
- Fig. 6: is a third schematic view of three gripping elements of the restraint coupling according to the embodiment of the invention,
- Fig. 7: is a first schematic view of an insert of each gripping element of the restraint coupling according to the embodiment of the invention, and
- Fig. 8: is a first schematic view of the gripping element with the insert as used in the restraint coupling according to the embodiment of the invention.

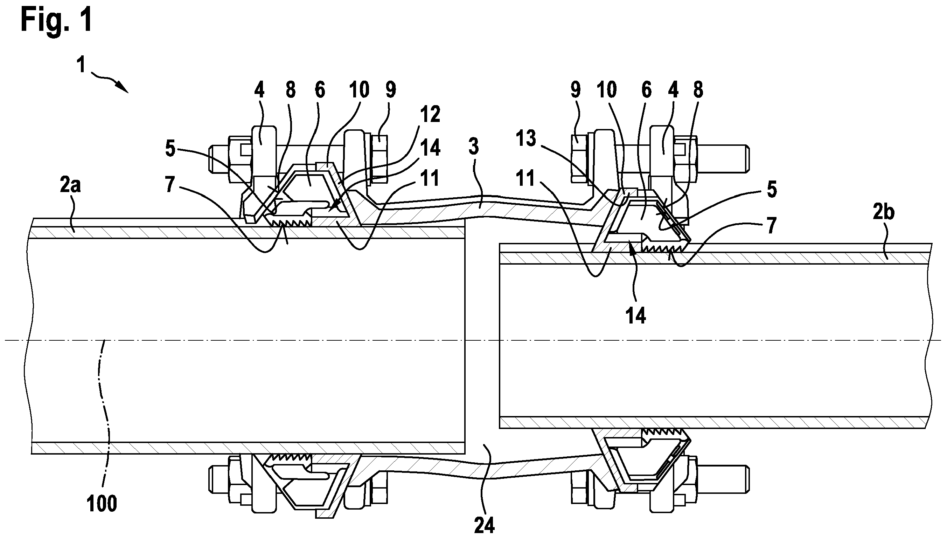

Figure 1 is a schematic view of a restraint coupling 1 according to a preferred embodiment of the present invention. The restraint coupling 1 comprises a main body 3, two end rings 4 and a plurality of wedge shaped gripping elements 6. The main body 3 has a through hole 24 with a middle axis 100, wherein an end ring 4 is mounted on each face side of the main body 3. Particularly, the main body 3 is a sleeve element and basically has the shape of a hollow cylinder. The middle axis 100 corresponds to a central axis of this hollow cylinder or sleeve element. Each end ring 4 is particularly clamped to the main body 3 via mounting elements 9, which particularly are bolts. The end rings extend preferably concentrically around the middle axis 100.

The wedge shaped gripping elements 6 are placed between the main body 3 and the end rings 4. Hence, when the end ring is clamped to the main body 3, a pressing force acts on the gripping elements 6. The gripping elements comprise a toothed surface 7 and a slanted surface 8. The toothed surface 7 is adapted to contact a peripheral surface of pipe 2a, 2b inserted through the annular ring 4 and the face side of the main body 3. The slanted surface 8 is slanted with respect to the toothed surface 7 and contacts an inside surface 5 of the end ring 4.

When the end ring 4 is clamped to the main body 3, the inside surface 5 of the end ring 4 is pressed to the slanted surface 8 of the gripping elements 6 provided between the end ring 4 and the main body 3. This causes the gripping elements 6 shifting towards the middle axis 100 and thus towards the pipe 2a, 2b. Due to such shifting, the toothed surface 7 of the gripping elements 6 is pressed to the pipe 2a, 2b thereby fixing the pipe 2a, 2b in the restraint coupling 1. Additionally, the pressing of the gripping elements 6 to the pipe also has a sealing function such that the pipe 2a, 2b is mounted to the restraint coupling 1 leak tight.

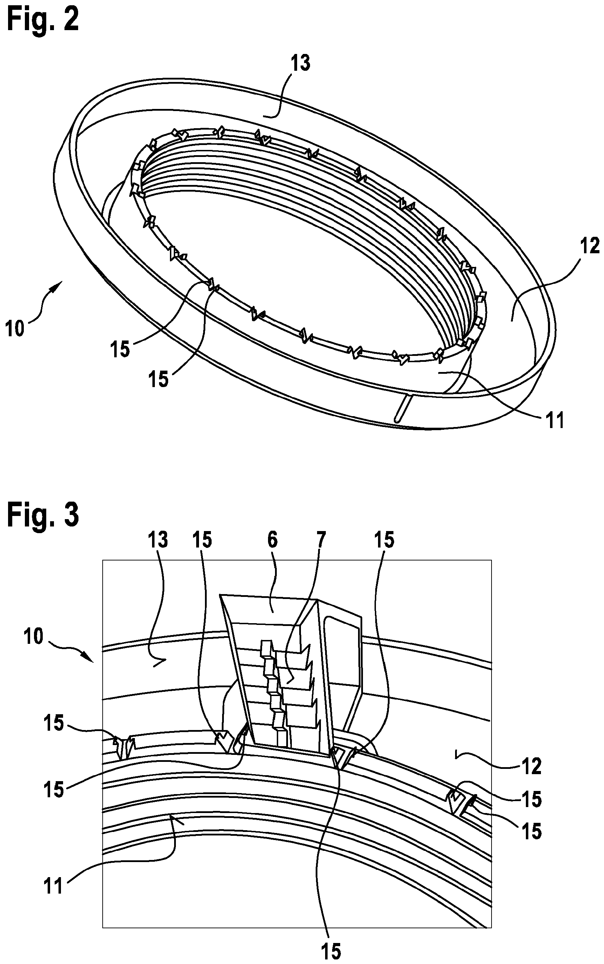

In order to further seal the pipe 2a, 2b with respect to the restraint coupling 1, the restraint coupling 1 comprises a gasket 10. The gasket 10 is shown in detail in Figure 2.

As can be seen from Figure 2, the gasket includes a first annular portion 11, a second annular portion 12 and a third annular portion 13. The first annular portion 11 and the third annular portion 13 extend in an angled direction from the second annular portion 12. In this way, basically a U-shape is provided.

As shown in Figure 1, the first annular portion 11 is adapted to get into contact with the pipe 2a, 2b. Therefore, the gripping elements 6 comprise sealing receiving portions 14 next to the toothed surfaces 7. This means that the first annular portion 11 is pressed to the pipe 2a, 2b together with the toothed surface 7. Thus, the holding function and the sealing function of the restraint coupling 1 are connected.

The second annular portion 12 is clamped between the gripping elements 6 and the main body 3. Particularly, the second annular portion 12 is provided between the main body 3 and the gripping elements 6 such that clamping the end ring 4 to the main body 3 also causes clamping the second annular portion 12 to the main body.

Due to the first annular portion 11 and the second annular portion 12, the pipe 2a, 2b and the main body 3 are sealed leak tight against the directed fluid. Fluid from the pipe 2a, 2b can therefore enter the main body 3 and can be transferred to another pipe 2a, 2b connected to the restraint coupling 1.

As shown in Figure 3, the gasket 10 also comprises protrusions 15 which extend in the direction of the middle axis. The protrusions 15 partly frame the toothed surface 7 of the gripping elements 6. Hence, a circumferential movement of the gripping elements 6 is prevented by the protrusions 15. The protrusions 15 act as spreading features which maintain an equal spread between the gripping elements 6. This is particularly advantageous since the gripping elements 6 are not linked to each other. The gripping elements 6 are provided between the main body 3 and the end ring 4 independent from each other. Thus, the protrusions 15 ensure that the gripping elements 6 maintain equally distributed around the middle axis 100 when the pipe 2a, 2b is clamped. On top, the gasket 10 holds the individual gripping elements 6 during transport and installation of the restraint coupling 1.

Maintaining an equal spread between the gripping elements 6 avoids stress concentration of the gripping forces and local loss of gasket support by wide gaps between one or more gripping elements 6. Hence, the restraint coupling 1 allows a safe and reliable connection to the pipe 2a, 2b with respect to both, the physical strength and the fluid-tightness of said connection.

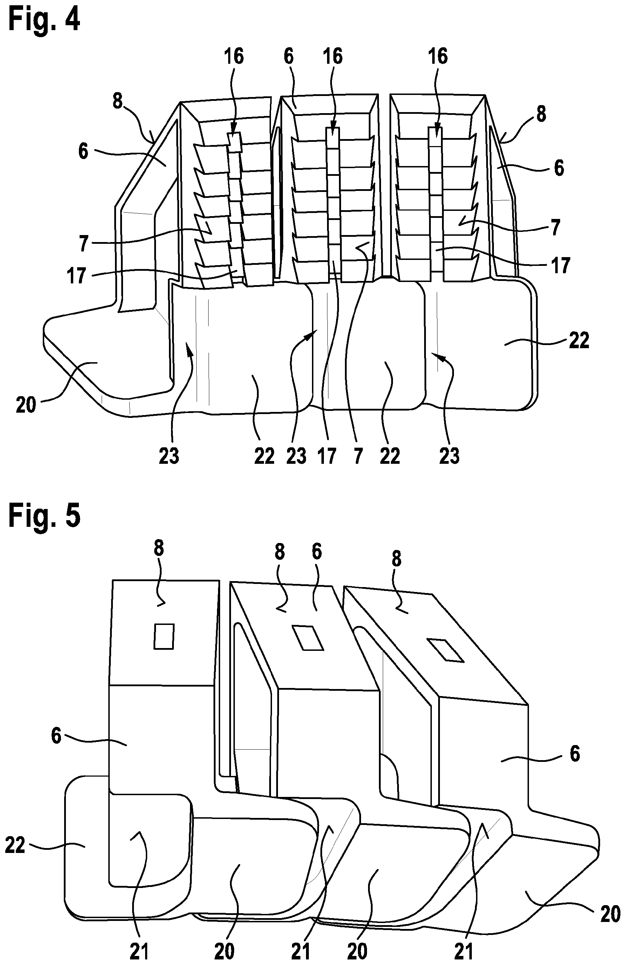

Figure 4, Figure 5, and Figure 6 each show three gripping elements 6 out of the plurality of gripping elements 6 assembled in an annular arrangement. Each Figure shows a different view of said three gripping elements 6. As explained above, the gripping elements 6 are wedge shaped and comprise a slanted surface 8 for converting an axial pressing force from the end ring 4 to a radial movement of the gripping element 6.

The gripping elements 6 further comprise a toothed surface 7 and a sealing receiving portion 12 next to said toothed surface 7. Due to the above described movement of the gripping elements 6, the toothed surface 7 and the first annular portion 11 of the gasket 10, which is provided at said sealing receiving portion 12, can be pressed to the pipe 2a, 2b. The gripping elements 6 are not linked to each other. However, the gripping elements 6 comprise a first wing 20 and a second wing 22 extending from the gripping element 6 in a circumferential direction and contacting a neighboring gripping element 6. In this way, gaps between the neighboring gripping elements 6 are covered.

The first wing 20 contacts an axial outside face 21 of the neighboring gripping element 6. The axial outside faces 21 and/or the first wings 20 of the gripping elements 6 are in contact with the second annular portion 12 of the gasket 10 and are thus clamping the gasket 10 between the gripping elements 6 and the main body 3. The second wings 22 contact a radial inside face 21 of the neighboring gripping elements 6. The radial inside faces 21 and/or the second wings 22 contact the first annular portion 11 of the gasket 10 and are thus clamping the gasket 10 between the gripping elements 6 and the pipe 2a, 2b. Hence, no gaps between the gripping elements 6 are present at those faces of the gasket 10 that are clamped to the pipe 2a, 2b or main body 3. Between the gripping elements 6, a sort of lap-joint is generated.

The first wings 20 and the second wings 22 provide a uniform pressing force to the gasket 10 such that a reliable fluid-tight sealing is provided. When being installed, the compression of the gasket 10 and/or gripping elements 6 creates bending forces in the first wings 20 and/or second wings 22. In order to avoid local stress concentration, the respective positions of the first wings 20 and second wings 22 are split to both sides of the gripping elements 6 in the circumferential direction around the middle axis 100.

The gripping elements 6 preferably are made of plastics, particularly of Polyoxymethylene. The gripping elements 6 therefore are optimally adapted to press onto pipes 2a, 2b made from softer materials like PE (polyethylene). For pressing pipes 2a, 2b made of harder materials like steel, uPVC (unplasticized polyvinyl chloride) or ductile iron, the gripping elements 6 comprise an insert 16 made from metal, particularly from steel. The insert 16 has a toothed portion 17 which is provided at the toothed surface 7 of the gripping elements 6. Therefore, when pressing the toothed surface 7 to the pipe 2a, 2b, the toothed portion 17 of the insert 16 is also pressed to the pipe 2a, 2b. When the gripping elements 6 are pressed to the pipe 2a, 2b, the plastic teeth of the toothed surface 7 and/or the metal teeth of the toothed portion 17 penetrate the outside surface of the pipe 2a, 2b to a limited extent. When the friction of the gripping elements 6 exceeds the axial force from fluid thrust a restraint connection is established.

When pipes 2a, 2b made from harder materials such as metal are used, the toothed surface 7 might creep due to being made from plastic causing a reduction of the required pressing force to hold the pipe 2a, 2b at the restraint coupling 1. However, the toothed portion 17 presses to the pipe 2a, 2b without relevant creeping. Thus, a reliable connection is maintained.

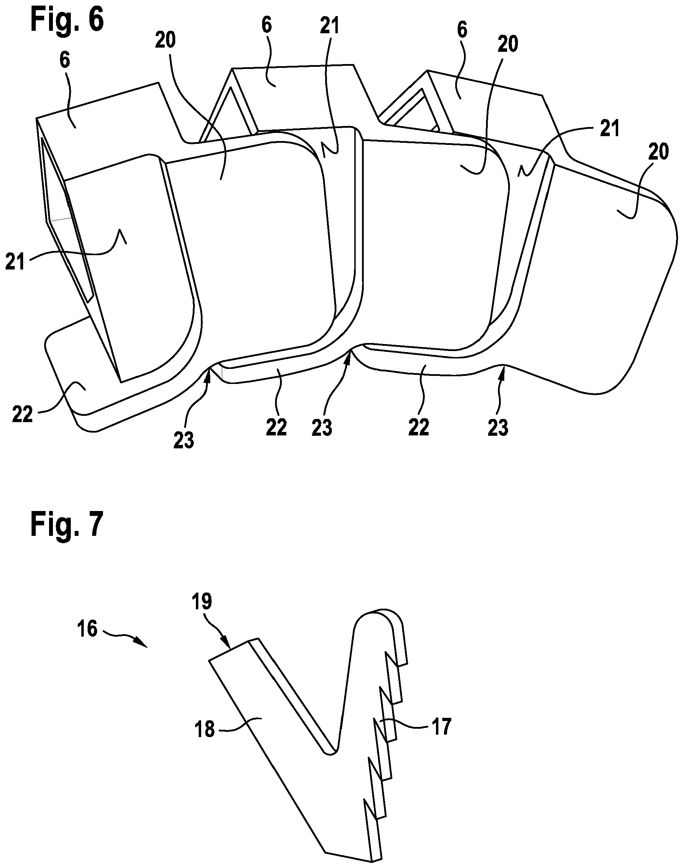

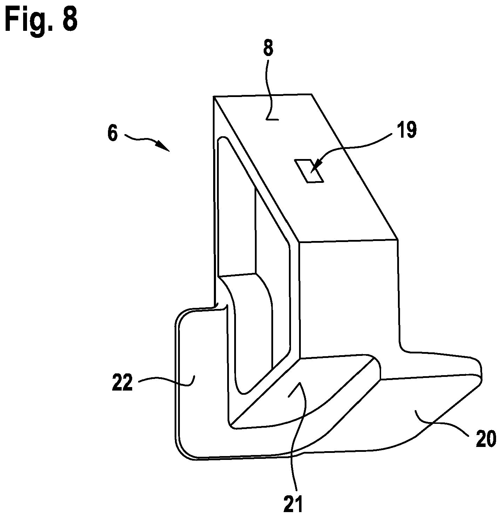

The insert 16 further comprises an extending arm 18 which extends from the toothed portion 17 as shown in Figure 7. The extending arm 18 extends to the slanted surface 8 of the gripping element 6 as can be seen from Figure 8. An end portion 19 of the extending arm 18 preferably protrudes from the slanting surface 8 up to 0.8 mm in order to contact the inside surface 5 of the end ring 4. This causes a direct metal-to-metal contact between the end ring 4 and the insert 16. A thin layer of epoxy coating between the end ring 4 and the insert 16 does not affect the direct metal-to-metal contact to a relevant extent. Such epoxy coating might have a thickness between 200 µm and 600 µm, preferably of 250 µm.

It was described above that the end portion 19 protrudes from the slanted surface 8. However, the end face 19 might also be flush with the slanted surface 8.

By such a design, a constantly maintained gripping effect on the surfaces of the pipes 2a, 2b is provided. Particularly, this is caused by the metal based transfer of the initiating pressing force excluding limitations of performance by creep. Hereby it is preferably to avoid loss of radial force component caused by slight axial movement of the gripping elements 6 when the mounting elements 9 stretch due to tensile stress from axial thrust force generated by the fluid pressure inside the pipe 2a, 2b and thus inside the main body 3. The negative inclination of the slanted surface 8 prevents loss of pressing force as the gripping elements 6 do not lose contact to the inside surface 5 of the end ring 4. The dimensions of the inside surface 5 of the end ring 4 are preferably selected such that the surface 5 in the end ring 4 ensures the support of the end portion 19 at any of the outside diameters of the pipes 2a, 2b connected to the restraint coupling 1.

### List of reference signs

- 1: restraint coupling
- 2a, 2b: pipe
- 3: main body
- 4: end ring
- 5: inside surface of end ring
- 6: gripping element
- 7: toothed surface of gripping element
- 8: slanted surface of gripping element
- 9: mounting element
- 10: gasket
- 11: first annular portion
- 12: second annular portion
- 13: third annular portion
- 14: sealing receiving portion
- 15: protrusion
- 16: insert
- 17: toothed portion
- 18: extending arm
- 19: end portion
- 20: first wing
- 21: axial outside face
- 22: second wing
- 23: radial inside face
- 24: through hole

- 100: middle axis

## Claims

1. Restraint coupling (1) for coupling at least one pipe (2a, 2b) comprising
• a main body (3) including a through hole (24) with a middle axis (100),
• at least one end ring (4) extending around the middle axis (100), and
• a plurality of wedge-shaped gripping elements (6), provided around the middle axis in an annular arrangement,
• wherein each gripping element (6) has a toothed surface (7) adapted to contact the pipe (2a, 2b) and a slanted surface (8) slanted with respect to the toothed surface (7), the slanted surface (8) being in contact with an inside surface (5) of the end ring (4),
• wherein the end ring (4) can be clamped to the main body (3) via mounting elements (9) thereby pressing the inside surface (5) of the end ring (4) against the slanted surface (8) of each gripping element (6) to shift each gripping element (6) towards the middle axis (100),
• wherein each gripping element (6) includes a metal insert (16), and
• wherein the insert (16) comprises a toothed portion (17) arranged at the toothed surface (7) of the gripping element (6) and adapted to contact the pipe (2a, 2b),
• **characterized in that** the insert (16) further comprises an extending arm (18) extending from the toothed portion (17) to the slanted surface (8) of the gripping element (6) and an end portion (19) of the extending arm (18) contacts the inside surface (5) of the end ring (4).

2. Restraint coupling (1) according to claim 1, **characterized by** an annular gasket (10) extending around the middle axis (100), wherein the gasket (10) comprises a first annular portion (11) adapted to contact the pipe and a second annular portion (12) which is arranged between the main body (3) and each gripping element (6), wherein each gripping element (6) includes a sealing receiving portion (14) next to the toothed surface (7) to receive the first annular portion (11).

3. Restraint coupling (1) according to claim 2, **characterized in that** the gasket (10) comprises a third annular portion (13), wherein the first annular portion (11), the second annular portion (12), and the third annular portion (13) are arranged in a U-shape and each gripping element (6) is partly held within said U-shape.

4. Restraint coupling (1) according to claim 3, **characterized in that** the first annular portion (11) comprises protrusions (15) and/or cutouts extending in parallel to the middle axis (100), wherein the protrusions (15) and/or cutouts restrict or prevent circumferential movement of the gripping elements (6).

5. Restraint coupling (1) according to any one of the previous claims, **characterized in that** each gripping element (6) includes a first wing (20) extending in a circumferential direction, wherein each first wing (20) contacts an axial outside face (21) of a neighboring gripping element (6).

6. Restraint coupling (1) according to any one of the previous claims, **characterized in that** each gripping element (6) includes a second wing (22) extending in a circumferential direction, wherein each second wing (22) contacts a radial inside face (23) of a neighboring gripping element (6).

7. Restraint coupling (1) according to any one of the previous claims, **characterized in that** each gripping element (6) is made from Polyoxymethylene.

8. Restraint coupling (1) according to any one of the previous claims, **characterized in that** one end ring (4) is provided on each axial flange face of the main body (3) and a plurality of gripping elements (6) is provided between each end ring (4) and the main body (3).
